# FASCICULE DE BREVET EUROPEEN

(11) **EP 2 221 730 B1**
(45) Date de publication et mention de la délivrance du brevet: **12.06.2013**
(21) Numéro de dépôt: 09014823.0
(22) Date de dépôt: 30.11.2009
(51) Int. Cl.: G06F 13/38, G06F 9/46

(54) **Procédé d'accès direct et concurrent de plusieurs unités de traitment virtuelles à une unité périphérique**
Direktes und gleichzeitiges Zugriffsverfahren mehrerer virtueller Verarbeitungseinheiten auf eine periphere Einheit
Method for direct and concurrent access of several virtual processing units to a peripheral unit

(30) Priorité: 24.12.2008 FR 0807430
(43) Date de publication de la demande: 25.08.2010
(73) Titulaire: STMicroelectronics Rousset SAS, 13790 Rousset (FR)
(72) Inventeur: Porquet, Joel, 13100 Aix En Provence (FR); Schwarz, Christian, 13790 Rousset (FR)
(74) Mandataire: de Roquemaurel, Bruno

(56) Documents cités:
- EP-A- 0 969 367
- US-A- 4 809 165
- US-A- 5 377 352

## Description

La présente invention concerne les systèmes de traitement de données, et notamment les systèmes pouvant exécuter plusieurs applications simultanément ou en temps partagé, les systèmes embarqués et les systèmes intégrés sur une puce. La présente invention concerne plus particulièrement les systèmes comportant une ou plusieurs unités centrales de traitement reliées à une ou plusieurs unités périphériques, et l'accès aux unités périphériques. Dans ce qui suit, une unité périphérique désigne une entité matérielle et éventuellement logicielle prévue pour fournir un ou plusieurs services sur requête d'une unité de traitement.

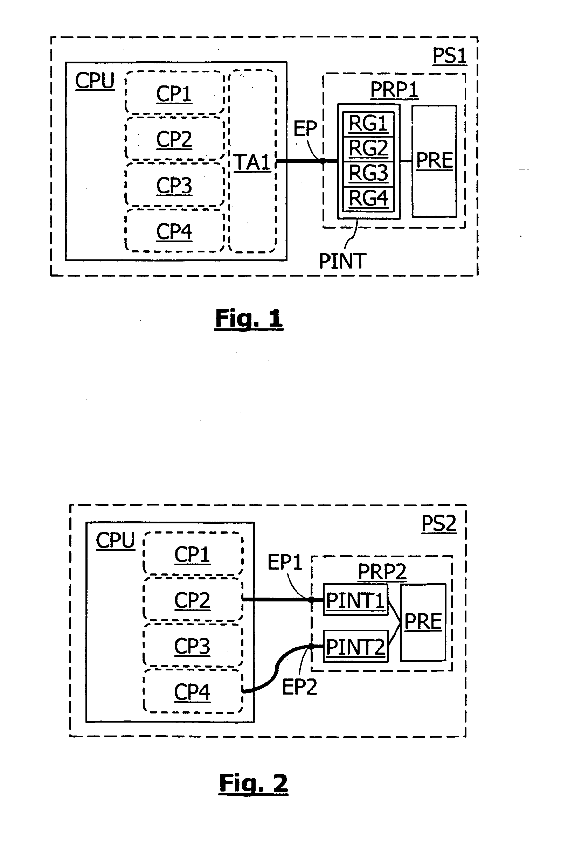

La figure 1 représente schématiquement l'architecture d'un système de traitement de données PS1. Le système PS1 comprend une unité centrale de traitement physique CPU, et une unité périphérique PRP1 connectée à l'unité CPU, par exemple par l'intermédiaire d'un bus d'adresse et de donnée. L'unité périphérique PRP1 peut être par exemple une unité d'interface avec des mémoires externes, un port d'entrée/sortie par exemple de type USB (Universal Serial Bus) ou UART (Universal Asynchronous Receiver Transmitter), ou encore une unité de contrôle de DMA (Direct Memory Acess).

L'unité CPU peut exécuter en temps partagé plusieurs applications indépendantes ou systèmes d'exploitation CP1, CP2, CP3, CP4, appelés dans ce qui suit "unité de traitement virtuelle". D'une manière générale, une "unité de traitement virtuelle" désigne un élément logiciel capable de fonctionner de manière native et autonome sur un ou plusieurs processeurs. L'unité CPU exécute un agent de confiance TA1 qui assure la fonction d"'hyperviseur" (hypervisor) pour permettre l'exécution de plusieurs unités virtuelles, par exemple dans un contexte de virtualisation. L'agent TA1 gère ainsi l'activation et la désactivation des unités virtuelles, par exemple en fonction de niveaux de priorités et de droits d'accès de celles-ci aux ressources du système.

L'unité périphérique PRP1 comprend une interface de commande PINT comprenant un ou plusieurs registres d'entrée et/ou de sortie et/ou d'entrée/sortie RG1-RG4, et une unité de traitement périphérique PRE assurant les fonctions de l'unité PRP1. L'interface PINT est accessible par un point d'accès EP correspondant à une ou plusieurs adresses de l'espace adressable par l'unité CPU.
Les registres RG1-RG4 peuvent avoir chacun une adresse de l'espace adressable. Ainsi, les unités CP1-CP4 peuvent accéder sélectivement en lecture et/ou en écriture à chacun des registres RG1-RG4.

Un arbitre, par exemple mis en oeuvre par l'agent TA1, est prévu pour gérer des requêtes d'accès éventuellement concurrentes, émises par les unités CP1-CP4 et destinées à l'unité périphérique PRP1 et attribuer les ressources de l'unité périphérique aux unités virtuelles. L'arbitre peut ainsi être un pilote (driver) de périphérique, exécutable par l'unité CPU. En raison de sa position entre les unités de traitement CP1-CP4 et l'unité périphérique PRP1, la présence de l'arbitre pénalise les performances du système par rapport à un système dans lequel les unités de traitement disposeraient d'un accès direct à l'unité périphérique. L'arbitre constitue également un élément supplémentaire sur lequel repose la sécurité du système et n'appartient pas nécessairement à un domaine de confiance. Cet inconvénient peut être rédhibitoire dans un système devant offrir un niveau de sécurité élevé.

Dans l'exemple de la figure 1, il a été proposé de remplacer l'arbitre par un mécanisme de réservation dans l'interface PINT de l'unité PRP1. Ce mécanisme permet à une unité virtuelle CP1-CP4 de réserver l'accès à l'unité PRP1 à la suite de la réception d'une première requête d'accès. Ce mécanisme consiste par exemple à lever un indicateur dans l'interface PINT, jusqu'à ce que l'unité périphérique ait fourni le service requis. Tant que cet indicateur est levé, les autres unités virtuelles ne peuvent pas accéder à l'unité PRP1. Si l'exécution de l'unité virtuelle ayant réservé l'unité PRP1 est stoppée pour une raison ou pour une autre, l'unité périphérique reste inaccessible pour les autres unités virtuelles. Ce mécanisme est donc vulnérable aux défaillances des unités virtuelles et aux unités virtuelles prévues par malveillance pour bloquer l'accès à une unité périphérique, même si une temporisation a été prévue pour débloquer à son échéance l'accès à l'unité périphérique.

Certaines unités périphériques comportent une machine d'état à états finis (Finite State Machine) qui contrôle le déroulement de traitements déclenchés à la suite de la réception d'une requête d'accès à l'unité périphérique émise par une unité virtuelle. Tant que la machine d'état est en cours de traitement d'une requête d'accès, l'unité périphérique reste indisponible pour les autres unités virtuelles, même si la machine d'état est dans un état d'attente d'une action de la part de l'unité virtuelle servie par l'unité périphérique. Il en résulte ici également qu'une unité virtuelle défaillante ou prévue par malveillance peut bloquer l'accès à une unité périphérique.

La figure 2 représente schématiquement une autre architecture d'un système de traitement de données PS2 ne présentant pas les inconvénients du système PS1 de la figure 1. Le système PS2 diffère du système PS1 en ce que l'unité périphérique PRP2 comprend plusieurs interfaces de commande PINT1, PINT2 accessibles chacune à l'unité CPU par un point d'entrée EP1, EP2 respectif. Chaque point d'entrée EP1, EP2 correspond à un ensemble distinct d'une ou plusieurs adresses de l'espace adressable. Cette architecture permet donc à plusieurs unités virtuelles d'accéder simultanément à l'unité périphérique PRP2 qui traite successivement les requêtes fournies dans les interfaces PINT1, PINT2.

Pour éviter d'avoir à prévoir un arbitre dans l'unité CPU, l'unité périphérique PRP2 doit comporter autant d'interfaces PINT1, PINT2 que d'unités de traitement virtuelles CP1-CP4 (CP2 et CP4 dans l'exemple de la figure 2) susceptibles d'avoir accès à l'unité périphérique PRP2, et d'attribuer une interface de commande à chacune de ces unités de traitement virtuelles CP2-CP4. Cette architecture offre donc une capacité limitée en nombre d'unités de traitement virtuelles pouvant avoir accès à l'unité périphérique PRP2. Cette architecture présente également l'inconvénient d'augmenter l'occupation par l'unité périphérique PRP2 de l'espace adressable de l'unité CPU.

Il est donc souhaitable de réaliser une unité périphérique qui soit accessible simultanément à plusieurs unités de traitement physiques et/ou virtuelles, sans qu'il soit nécessaire de faire confiance à des éléments logiciels supplémentaires exécutés par les unités de traitements physiques. Il est également souhaitable de réaliser une unité périphérique qui soit accessible par un point d'entrée unique, tout en offrant la possibilité à plusieurs unités de traitement virtuelles de configurer simultanément l'interface de commande de l'unité périphérique.

Dans un mode de réalisation de l'invention, il est prévu un procédé d'accès d'une unité de traitement virtuelle à une unité périphérique, l'unité de traitement virtuelle étant mise en oeuvre par une unité de traitement physique connectée à l'unité périphérique et exécutant plusieurs unités de traitement virtuelles, le procédé comprenant une étape de transmission à l'unité périphérique d'une requête d'accès émise par l'unité de traitement virtuelle pour accéder à un service fourni par l'unité périphérique, la requête d'accès comprenant au moins un paramètre. Selon ce mode de réalisation, la requête d'accès comprend un identifiant de l'unité de traitement virtuelle, le procédé comprenant des étapes exécutées par l'unité périphérique à la suite de la réception d'une requête d'accès, consistant à attribuer un ensemble d'au moins un registre à l'identifiant d'unité virtuelle transmis dans la requête d'accès reçue, mémoriser le paramètre transmis dans la requête d'accès dans l'ensemble de registre attribué à l'identifiant d'unité virtuelle transmis dans la requête d'accès reçue, et lorsque l'unité périphérique est disponible pour traiter une requête, sélectionner l'un des ensembles de registre, et déclencher un traitement d'exécution de service dans l'unité périphérique à partir des paramètres mémorisés dans l'ensemble de registre sélectionné.

Selon un mode de réalisation de l'invention, la sélection de l'un des ensembles de registre est effectuée parmi les ensembles de registre remplissant une condition pour déclencher un traitement dans l'unité périphérique.

Selon un mode de réalisation de l'invention, le procédé comprend une étape de mémorisation dans l'ensemble de registre sélectionné de paramètres élaborés durant le traitement d'exécution de service dans l'unité périphérique.

Selon un mode de réalisation de l'invention, le procédé comprend une étape de transmission de paramètres mémorisés dans l'ensemble de registre sélectionné à l'unité virtuelle à laquelle l'ensemble de registre sélectionné a été attribué.

Selon un mode de réalisation de l'invention, le procédé comprend des étapes consistant à mémoriser dans chaque ensemble de registre attribué à une unité virtuelle des paramètres définissant un état courant de machine d'état à états finis, charger dans la machine d'état les paramètres définissant un état courant de machine d'état, mémorisé dans l'ensemble de registre sélectionné, activer la machine d'état pour déterminer des paramètres définissant un état suivant de la machine d'état, et mémoriser les paramètres obtenus dans l'ensemble de registre sélectionné, de manière à définir un nouvel état courant de la machine d'état.

Dans un mode de réalisation de l'invention, il est également prévu une unité périphérique fournissant un service à des unités de traitement virtuelles mises en oeuvre par une unité de traitement physique connectée à l'unité périphérique et exécutant plusieurs unités de traitement virtuelles, l'unité périphérique étant configurée pour recevoir des requêtes d'accès émises par les unités traitement virtuelles pour accéder à un service fourni par l'unité périphérique, chaque requête d'accès comprenant au moins un paramètre. Selon un mode de réalisation, chaque requête d'accès comprend un identifiant de l'unité de traitement virtuelle ayant émis la requête, l'unité périphérique comprenant plusieurs ensembles de registres comportant chacun au moins un registre pour mémoriser un paramètre transmis dans une requête d'accès reçue, l'unité périphérique étant configurée pour, à la suite de la réception d'une requête d'accès attribuer l'un des ensembles de registre à l'identifiant d'unité virtuelle transmis dans la requête d'accès reçue, mémoriser le paramètre transmis dans la requête d'accès reçue dans l'ensemble de registre attribué à l'identifiant d'unité virtuelle transmis dans la requête d'accès reçue, et lorsque l'unité périphérique est disponible pour traiter une requête, sélectionner l'un des ensembles de registre, et déclencher un traitement d'exécution de service dans l'unité périphérique à partir des paramètres mémorisés dans l'ensemble de registre sélectionné.

Selon un mode de réalisation de l'invention, l'unité périphérique est configurée pour sélectionner l'un des ensembles de registre parmi les ensembles de registre remplissant une condition pour déclencher un traitement dans l'unité périphérique.

Selon un mode de réalisation de l'invention, l'unité périphérique est configurée pour mémoriser dans l'ensemble de registre sélectionné des paramètres élaborés durant le traitement d'exécution de service dans l'unité périphérique.

Selon un mode de réalisation de l'invention, l'unité périphérique est configurée pour transmettre des paramètres mémorisés dans l'ensemble de registre sélectionné à l'unité virtuelle à laquelle l'ensemble de registre sélectionné a été attribué.

Selon un mode de réalisation de l'invention, l'unité périphérique est configurée pour mémoriser dans chaque ensemble de registre attribué à une unité virtuelle des paramètres définissant un état courant de machine d'état à états finis, charger dans la machine d'état les paramètres définissant un état courant de machine d'état, mémorisé dans l'ensemble de registre sélectionné, activer la machine d'état pour déterminer des paramètres définissant un état suivant de la machine d'état, et mémoriser les paramètres obtenus dans l'ensemble de registre sélectionné, de manière à définir un nouvel état courant de la machine d'état.

Dans un mode de réalisation de l'invention, il est également prévu un système de traitement de données comprenant une unité de traitement physique exécutant plusieurs unités de traitement virtuelles, et une unité périphérique connectée à l'unité de traitement physique. Selon un mode de réalisation, l'unité périphérique est tel que définie précédemment.

Selon un mode de réalisation de l'invention, le système comprend plusieurs unités de traitement physiques exécutant chacune une ou plusieurs unités de traitement virtuelles, chaque unité de traitement physique étant connectée à l'unité périphérique par un point d'accès commun.

Des exemples de réalisation de l'invention seront décrits dans ce qui suit, à titre non limitatif en relation avec les figures jointes parmi lesquelles :
- la figure 1 décrite précédemment représente schématiquement une architecture d'un système de traitement de données,
- la figure 2 décrite précédemment représente schématiquement une autre architecture d'un système de traitement de données,
- la figure 3 représente schématiquement une architecture d'un système de traitement de données, selon un mode de réalisation,
- la figure 4 représente schématiquement une architecture d'un système de traitement de données, selon un autre mode de réalisation.

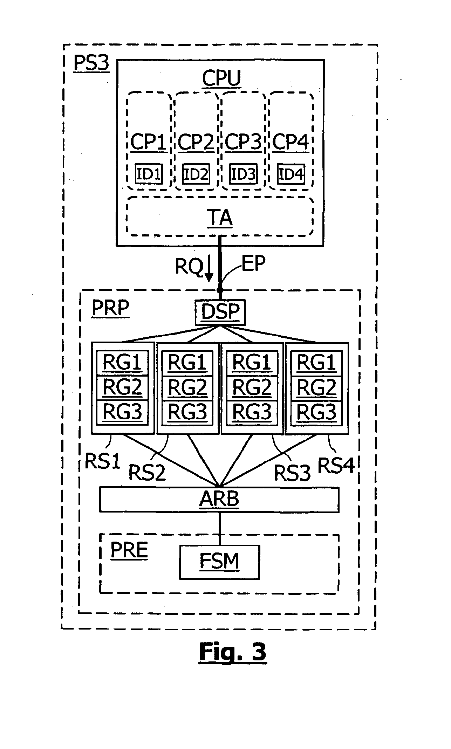

La figure 3 représente schématiquement l'architecture d'un système de traitement de données PS3 selon un mode de réalisation. Sur la figure 3, le système PS3 comprend une unité centrale de traitement physique CPU, et une unité périphérique PRP connectée à l'unité CPU. L'unité périphérique PRP peut être par exemple une unité d'interface avec des mémoires externes, un port d'entrée/sortie par exemple de type USB ou UART, ou encore une unité de contrôle de DMA (Direct Memory Acess).

L'unité CPU peut exécuter en temps partagé plusieurs unités de traitement virtuelles CP1, CP2, CP3, CP4. A cet effet, l'unité CPU exécute un agent de confiance TA qui assure la fonction d"'hyperviseur" (hypervisor) pour permettre l'exécution de plusieurs unités virtuelles, par exemple dans un contexte de virtualisation. L'agent TA gère ainsi l'activation et la désactivation des unités virtuelles, par exemple en fonction de niveaux de priorités et de droits d'accès de celles-ci aux ressources du système.

Selon un mode de réalisation, l'unité PRP comprend plusieurs ensembles identiques d'un ou plusieurs registres RS1-RS4, une unité d'aiguillage DSP, une unité de traitement périphérique PRE et une unité d'arbitrage ARB. Chaque ensemble de registre RS1-RS4 comprend un ou plusieurs registres d'entrée et/ou de sortie et/ou d'entrée/sortie RG1-RG3. L'unité d'aiguillage DSP est connectée aux ensembles de registre RS1-RS4 et à un unique point d'accès EP de l'unité PRP. L'unité DSP est configurée pour transférer des requêtes d'accès transmises à l'unité PRP dans l'un des ensembles de registre RS1-RS4 préalablement sélectionné. Le point d'accès EP correspond à une ou plusieurs adresses de l'espace adressable par l'unité CPU. Chaque adresse du point d'accès EP permet à l'unité CPU d'accéder à l'un des registres RG1-RG3 d'un ensemble de registre RS1-RS4 préalablement sélectionné par l'unité DSP. L'unité d'arbitrage ARB assure la mise en communication de l'un des ensembles de registres RS1-RS4 préalablement sélectionné avec l'unité PRE. L'unité de traitement périphérique PRE fournit le ou les services offerts par l'unité PRP en fonction du contenu de l'un des ensembles RS1-RS4 préalablement sélectionné par l'unité ARB.

Les unités de traitement virtuelles CP1-CP4 peuvent émettre des requêtes d'accès RQ à un ou plusieurs services fournis par l'unité périphérique PRP. Les requêtes d'accès sont transmises avec un identifiant ID1-ID4 de l'unité virtuelle ayant émis la requête. Chaque requête RQ peut comprendre un ou plusieurs paramètres relatifs à l'exécution d'un service par l'unité PRP. L'unité DSP reçoit les requêtes d'accès RQ, sélectionne un ensemble de registres RS1-RS4 en fonction de l'identifiant d'unité virtuelle ID1-ID4 reçu, et transfère le ou les paramètres de la requête reçue dans les registres RG1-RG3 de l'ensemble de registre sélectionné. Ainsi, un ensemble de registre est attribué à chaque unité CP1-CP4 ayant besoin d'accéder aux services de l'unité périphérique. Cette attribution peut être effectuée d'une manière statique, par exemple lors d'une phase de configuration du système PS3, ou d'une manière dynamique par l'unité DSP au fur et à mesure de la réception de requêtes d'accès RQ émises par les unités virtuelles. Une unité virtuelle ne peut donc pas empêcher une autre unité virtuelle d'accéder à l'unité périphérique, même si l'accès à l'unité périphérique ne comporte qu'un unique point d'entrée.

Lorsque l'unité de traitement PRE de l'unité PRP est disponible, notamment à la fin de la fourniture d'un service, l'unité ARB sélectionne l'un des ensembles de registre RS1-RS4, c'est-à-dire une requête à traiter, et transmet ou donne accès aux paramètres qu'il contient à l'unité PRE. L'unité PRE est ensuite activée pour fournir un service correspondant à la requête à traiter. La sélection de l'un des ensembles de registre est effectuée parmi ceux dont le contenu remplit une condition pour déclencher une opération dans l'unité PRE. Si à un instant donné, plusieurs ensembles de registre satisfont une condition de déclenchement d'une opération dans l'unité PRE, l'unité ARB sélectionne un ensemble de registre à l'aide d'un algorithme de sélection. L'ensemble de registre sélectionné peut être le plus anciennement modifié à la suite de la réception d'une requête reçue d'une unité virtuelle CP1-CP4. Un niveau de priorité peut être associé aux requêtes d'accès. Dans ce cas, l'unité ARB peut également sélectionner parmi les ensembles de registre en condition pour déclencher une opération, celui qui est associé au niveau de priorité le plus élevé.

L'activation de l'unité de traitement PRE est ainsi placée sous le contrôle de l'arbitre ARB qui décide quelle requête peut être traitée en fonction de l'état de toutes les requêtes pouvant être mémorisées dans les ensembles de registres RS1-RS4. Une unité de traitement virtuelle ne peut donc pas empêcher le traitement par l'unité périphérique PRP d'une requête d'accès émise par une autre unité virtuelle.

Si le traitement exécuté par l'unité PRE produit ou met à jour des paramètres destinés à l'unité CP1-CP4 ayant émis la requête traitée, ceux-ci peuvent être mémorisés dans l'un des ensembles de registre RS1-RS4. L'unité ARB transfère alors les paramètres à mémoriser dans l'ensemble de registre sélectionné lors de l'activation de l'unité PRE. A la fin du traitement réalisé par l'unité PRE, l'unité DSP peut transmettre tout ou partie du contenu de l'ensemble de registre sélectionné à l'unité virtuelle à laquelle l'ensemble de registre a été attribué.

Dans un mode de réalisation, les traitements effectués par l'unité PRE sont contrôlés par une machine d'état à états finis FSM. Tous les paramètres définissant un état courant dans la machine d'état FSM sont mémorisés dans des ensembles de registres attribués à chaque identifiant ID1-ID4 d'unité virtuelle CP1-CP4, par exemple les ensembles de registre RS1-RS4. Lorsqu'un ensemble de registre est sélectionné pour traiter une requête d'accès, les paramètres mémorisés dans l'ensemble de registre sélectionné sont alors transférés à la machine d'état FSM pour restaurer l'état de cette dernière tel qu'il était à la fin du dernier traitement réalisé pour l'unité virtuelle correspondant à l'ensemble de registre sélectionné. La machine d'état FSM peut alors être activée pour obtenir des paramètres définissant un état suivant de la machine d'état pour l'unité virtuelle correspondant à l'ensemble de registre sélectionné. Les paramètres ainsi obtenus sont mémorisés dans l'ensemble de registre sélectionné, afin qu'ils soient éventuellement transmis à l'unité virtuelle et/ou soient utilisés pour définir un nouvel état courant de la machine d'état FSM lors d'un nouveau traitement appliqué à l'ensemble de registre sélectionné, durant lequel la machine d'état est activée.

Une même machine d'état peut ainsi être utilisée pour contrôler plusieurs séquences d'opérations exécutées simultanément par l'unité PRE pour plusieurs unités virtuelles, sans risque qu'une unité virtuelle puisse agir sur l'état courant de la machine d'état mémorisé pour une autre unité virtuelle.

Dans l'exemple d'une unité périphérique de type unité de contrôle de DMA, chaque ensemble de registre RS1-RS4 comprend un registre d'adresse source pour mémoriser une adresse d'un bloc de données à transférer, un registre d'adresse de destination pour mémoriser une adresse où doit être transféré le bloc de données, un registre de longueur pour mémoriser la longueur du bloc de données et un registre de validation pour indiquer si les registres d'adresse source, d'adresse de destination et de longueur spécifient un transfert à effectuer et donc si le transfert peut être effectué. Le registre de validation peut être mis à jour par l'unité DSP pour indiquer que la requête telle qu'elle est mémorisée dans l'ensemble de registre est en état d'être traitée. Durant ou à la fin de l'exécution de la requête, le registre de validation est réinitialisé par exemple par l'unité ARB.

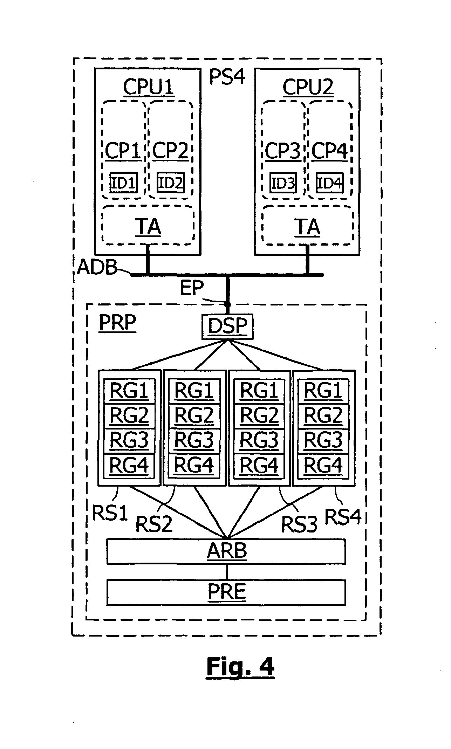

Il est à noter que le système peut comprendre plusieurs unités de traitement physiques exécutant chacune une ou plusieurs unités de traitement virtuelles. Dans ce cas, un identifiant distinct est attribué à chaque unité de traitement virtuelle du système. Ainsi, la figure 4 représente un système PS4 selon un mode de réalisation. Le système PS4 diffère du système PS3 en ce qu'il comprend plusieurs unités de traitement physiques CPU1, CPU2 exécutant chacune des unités de traitement virtuelles CP1-CP4. Dans l'exemple de la figure 4, l'unité CPU1 exécute les unités virtuelles CP1 et CP2, et l'unité CPU2, les unités virtuelles CP3 et CP4. Les unités CPU1, CPU2 sont connectées à l'unique point d'entrée EP de l'unité périphérique PRP à l'aide d'un bus d'adresse et de donnée ADB. Les accès des unités CP1-CP4 à l'unité PRP sont réalisés de la même façon que dans le système PS3. Les requêtes émises par les unités virtuelles CP1-CP4 sont transmises séquentiellement à l'unité PRP par le bus ADB, et transférées au fur et à mesure de leur réception par l'unité DSP dans les ensembles de registres RS1-RS4.

## Revendications

1. Procédé d'accès d'une unité de traitement virtuelle (CP1-CP4) à une unité périphérique (PRP), l'unité de traitement virtuelle étant mise en oeuvre par une unité de traitement physique (CPU) connectée à l'unité périphérique et exécutant plusieurs unités de traitement virtuelles, le procédé comprenant une étape de transmission à l'unité périphérique d'une requête d'accès émise par l'unité de traitement virtuelle pour accéder à un service fourni par l'unité périphérique, la requête d'accès comprenant au moins un paramètre,
**caractérisé en ce que** la requête d'accès comprend un identifiant (ID1-ID4) de l'unité de traitement virtuelle (CP1-CP4), le procédé comprenant des étapes exécutées par l'unité périphérique (PRP) à la suite de la réception d'une requête d'accès, consistant à :
attribuer un ensemble (RS1-RS4) d'au moins un registre (RG1-RG3) à l'identifiant d'unité virtuelle (ID1-ID4) transmis dans la requête d'accès reçue,
mémoriser le paramètre transmis dans la requête d'accès dans l'ensemble de registre attribué à l'identifiant d'unité virtuelle transmis dans la requête d'accès reçue, et
lorsque l'unité périphérique est disponible pour traiter une requête, sélectionner l'un des ensembles de registre, et déclencher un traitement d'exécution de service dans l'unité périphérique à partir des paramètres mémorisés dans l'ensemble de registre sélectionné.

2. Procédé selon la revendication 1, dans lequel la sélection de l'un des ensembles de registre (RS1-RS4) est effectuée parmi les ensembles de registre remplissant une condition pour déclencher un traitement dans l'unité périphérique.

3. Procédé selon la revendication 1 ou 2, comprenant une étape de mémorisation dans l'ensemble de registre sélectionné (RS1-RS4) de paramètres élaborés durant le traitement d'exécution de service dans l'unité périphérique (PRP).

4. Procédé selon la revendication 3, comprenant une étape de transmission de paramètres mémorisés dans l'ensemble de registre sélectionné (RS1-RS4) à l'unité virtuelle (CP1-CP4) à laquelle l'ensemble de registre sélectionné a été attribué.

5. Procédé selon l'une des revendications 1 à 4, comprenant des étapes consistant à mémoriser dans chaque ensemble de registre (RS1-RS4) attribué à une unité virtuelle (CP1-CP4) des paramètres définissant un état courant de machine d'état à états finis (FSM), charger dans la machine d'état les paramètres définissant un état courant de machine d'état, mémorisé dans l'ensemble de registre sélectionné, activer la machine d'état pour déterminer des paramètres définissant un état suivant de la machine d'état, et mémoriser les paramètres obtenus dans l'ensemble de registre sélectionné, de manière à définir un nouvel état courant de la machine d'état.

6. Unité périphérique fournissant un service à des unités de traitement virtuelles (CP1-CP4) mises en oeuvre par une unité de traitement physique (CPU) connectée à l'unité périphérique et exécutant plusieurs unités de traitement virtuelles, l'unité périphérique étant configurée pour recevoir des requêtes d'accès émises par les unités traitement virtuelles pour accéder à un service fourni par l'unité périphérique, chaque requête d'accès comprenant au moins un paramètre,
**caractérisée en ce que** chaque requête d'accès comprend un identifiant (ID1-ID4) de l'unité de traitement virtuelle (CP1-CP4) ayant émis la requête, l'unité périphérique (PRP) comprenant plusieurs ensembles de registres comportant chacun au moins un registre pour mémoriser un paramètre transmis dans une requête d'accès reçue, l'unité périphérique étant configurée pour, à la suite de la réception d'une requête d'accès :
attribuer l'un des ensembles de registre (RS1-RS4) à l'identifiant d'unité virtuelle (ID1-ID4) transmis dans la requête d'accès reçue,
mémoriser le paramètre transmis dans la requête d'accès reçue dans l'ensemble de registre attribué à l'identifiant d'unité virtuelle transmis dans la requête d'accès reçue, et
lorsque l'unité périphérique est disponible pour traiter une requête, sélectionner l'un des ensembles de registre, et déclencher un traitement d'exécution de service dans l'unité périphérique à partir des paramètres mémorisés dans l'ensemble de registre sélectionné.

7. Unité périphérique selon la revendication 6, configurée pour sélectionner l'un des ensembles de registre (RS1-RS4) parmi les ensembles de registre remplissant une condition pour déclencher un traitement dans l'unité périphérique.

8. Unité périphérique selon la revendication 6 ou 7, configurée pour mémoriser dans l'ensemble de registre sélectionné (RS1-RS4) des paramètres élaborés durant le traitement d'exécution de service dans l'unité périphérique (PRP).

9. Unité périphérique selon la revendication 8, configurée pour transmettre des paramètres mémorisés dans l'ensemble de registre sélectionné (RS1-RS4) à l'unité virtuelle (CP1-CP4) à laquelle l'ensemble de registre sélectionné a été attribué.

10. Unité périphérique selon l'une des revendications 6 à 9, configurée pour mémoriser dans chaque ensemble de registre (RS1-RS4) attribué à une unité virtuelle (CP1-CP4) des paramètres définissant un état courant de machine d'état à états finis (FSM), charger dans la machine d'état les paramètres définissant un état courant de machine d'état, mémorisé dans l'ensemble de registre sélectionné, activer la machine d'état pour déterminer des paramètres définissant un état suivant de la machine d'état, et mémoriser les paramètres obtenus dans l'ensemble de registre sélectionné, de manière à définir un nouvel état courant de la machine d'état.

11. Système de traitement de données comprenant une unité de traitement physique (CPU) exécutant plusieurs unités de traitement virtuelles (CP1-CP4), et une unité périphérique (PRP) connectée à l'unité de traitement physique,
**caractérisé en ce que** l'unité périphérique (PRP) est conforme à l'une des revendications 6 à 10.

12. Système selon la revendication 11, comprenant plusieurs unités de traitement physiques (CPU1, CPU2) exécutant chacune une ou plusieurs unités de traitement virtuelles (CP1-CP4), chaque unité de traitement physique étant connectée à l'unité périphérique, (PRP) par un point d'accès commun (EP).

## Patentansprüche

1. Verfahren für den Zugriff einer virtuellen Verarbeitungseinheit (CP1-CP4) auf eine periphere Einheit (PRP), wobei die virtuelle Verarbeitungseinheit durch eine physische Verarbeitungseinheit (CPU), die mit der peripheren Einheit verbunden ist und mehrere virtuelle Verarbeitungseinheiten ausführt, implementiert wird, das Verfahren umfassend einen Schritt der Übertragung an die periphere Einheit einer von der virtuellen Verarbeitungseinheit abgegebenen Zugriffsanfrage, um auf einen von der peripheren Einheit gelieferten Service zuzugreifen, wobei die Zugriffsanfrage zumindest einen Parameter umfasst,
**dadurch gekennzeichnet, dass** die Zugriffsanfrage einen Identifizierer (ID1-ID4) der virtuellen Verarbeitungseinheit (CP1-CP4) umfasst, das Verfahren umfassend durch die periphere Einheit (PRP) im Anschluss an den Empfang einer Zugriffsanfrage ausgeführte Schritte, die darin bestehen:
einen Satz (RS1-RS4) von zumindest einem Register (RG1-RG3) des in der empfangenen Zugriffsanfrage übertragenen Identifizierers der virtuellen Einheit (ID1-ID4) zuzuordnen,
den in der Zugriffsanfrage übertragenen Parameter im Registersatz, der dem in der empfangenen Zugriffsanfrage übertragenen Identifizierer der virtuellen Einheit zugeordnet ist, zu speichern, und
wenn die periphere Einheit verfügbar ist, um eine Anfrage zu verarbeiten, einen der Registersätze auszuwählen, und eine Verarbeitung der Serviceausführung in der peripheren Einheit anhand der im ausgewählten Registersatz gespeicherten Parameter auszulösen.

2. Verfahren nach Anspruch 1, in dem die Auswahl von einem der Registersätze (RS1-RS4) unter den Registersätzen ausgeführt wird, die eine Bedingung erfüllen, um eine Verarbeitung in der peripheren Einheit auszulösen.

3. Verfahren nach Anspruch 1 oder 2, umfassend einen Schritt der Speicherung im ausgewählten Registersatz (RS1-RS4) von während der Verarbeitung der Serviceausführung in der peripheren Einheit (PRP) erstellten Parametern.

4. Verfahren nach Anspruch 3, umfassend einen Schritt der Übertragung von im ausgewählten Registersatz (RS1-RS4) gespeicherten Parametern an die virtuelle Einheit (CP1-CP4), der der ausgewählte Registersatz zugeordnet wurde.

5. Verfahren nach einem der Ansprüche 1 bis 4, umfassend Schritte, die darin bestehen, in jedem Registersatz (RS1-RS4), der einer virtuellen Einheit (CP1-CP4) zugeordnet ist, Parameter zu speichern, die einen laufenden Zustand einer Zustandsmaschine (FSM) definieren, in die Zustandsmaschine die Parameter zu laden, die einen laufenden Zustand einer Zustandsmaschine definieren, der im ausgewählten Registersatz gespeichert ist, die Zustandsmaschine zu aktivieren, um Parameter zu bestimmen, die einen nächsten Zustand der Zustandsmaschine definieren, und die erhaltenen Parameter im ausgewählten Registersatz derart zu speichern, dass ein neuer laufender Zustand der Zustandsmaschine definiert wird.

6. Periphere Einheit, die einen Service an virtuelle Verarbeitungseinheiten (CP1-CP4) liefert, die durch eine physische Verarbeitungseinheit (CPU), die mit der peripheren Einheit verbunden ist und mehrere virtuelle Verarbeitungseinheiten ausführt, implementiert werden, wobei die periphere Einheit konfiguriert ist, um Zugriffsanfragen zu empfangen, die von den virtuellen Verarbeitungseinheiten abgegeben werden, um auf einen von der peripheren Einheit gelieferten Service zuzugreifen, wobei jede Zugriffsanfrage zumindest einen Parameter umfasst,
**dadurch gekennzeichnet, dass** jede Zugriffsanfrage einen Identifizierer (ID1-ID4) von der die Anfrage abgebenden virtuellen Verarbeitungseinheit (CP1-CP4) umfasst, wobei die periphere Einheit (PRP) mehrere Registersätze umfasst, die jeweils zumindest ein Register umfassen, um einen in einer empfangenen Zugriffsanfrage übertragenen Parameter zu speichern, wobei die periphere Einheit konfiguriert ist, um im Anschluss an den Empfang einer Zugriffsanfrage:
einen der Registersätze (RS1-RS4) des in der empfangenen Zugriffsanfrage übertragenen Identifizierers der virtuellen Einheit (ID1-ID4) zuzuordnen,
den in der empfangenen Zugriffsanfrage übertragenen Parameter im Registersatz, der dem in der empfangenen Zugriffsanfrage übertragenen Identifizierer der virtuellen Einheit zugeordnet ist, zu speichern, und
wenn die periphere Einheit verfügbar ist, um eine Anfrage zu verarbeiten, einen der Registersätze auszuwählen, und eine Verarbeitung der Serviceausführung in der peripheren Einheit anhand der im ausgewählten Registersatz gespeicherten Parameter auszulösen.

7. Periphere Einheit nach Anspruch 6, die konfiguriert ist, um einen der Registersätze (RS1-RS4) unter den Registersätzen, die eine Bedingung erfüllen, um eine Verarbeitung in der peripheren Einheit auszulösen, auszuwählen.

8. Periphere Einheit nach Anspruch 6 oder 7, die konfiguriert ist, um während der Verarbeitung der Serviceausführung in der peripheren Einheit (PRP) erstellte Parameter im ausgewählten Registersatz (RS1-RS4) zu speichern.

9. Periphere Einheit nach Anspruch 8, die konfiguriert ist, um im ausgewählten Registersatz (RS1-RS4) gespeicherte Parameter an die virtuelle Einheit (CP1-CP4), der der ausgewählte Registersatz zugeordnet wurde, zu übertragen.

10. Periphere Einheit nach einem der Ansprüche 6 bis 9, die konfiguriert ist, um in jedem Registersatz (RS1-RS4), der einer virtuellen Einheit (CP1-CP4) zugeordnet ist, Parameter zu speichern, die einen laufenden Zustand einer Zustandsmaschine (FSM) definieren, in die Zustandsmaschine die Parameter zu laden, die einen laufenden Zustand einer Zustandsmaschine definieren, der im ausgewählten Registersatz gespeichert ist, die Zustandsmaschine zu aktivieren, um Parameter zu bestimmen, die einen nächsten Zustand der Zustandsmaschine definieren, und die erhaltenen Parameter im ausgewählten Registersatz derart zu speichern, dass ein neuer laufender Zustand der Zustandsmaschine definiert wird.

11. System zur Verarbeitung von Daten umfassend eine physische Verarbeitungseinheit (CPU), die mehrere virtuelle Verarbeitungseinheiten (CP1-CP4) ausführt, und eine periphere Einheit (PRP), die mit der physischen Verarbeitungseinheit verbunden ist,
**dadurch gekennzeichnet, dass** die periphere Einheit (PRP) einem der Ansprüche 6 bis 10 entspricht.

12. System nach Anspruch 11, umfassend mehrere physische Verarbeitungseinheiten (CPU1, CPU2), die jeweils eine oder mehrere virtuelle Verarbeitungseinheiten (CP1-CP4) ausführen, wobei jede physische Verarbeitungseinheit durch eine gemeinsame Zugriffsstelle (EP) mit der peripheren Einheit (PRP) verbunden ist.

## Claims

1. A method for enabling a virtual processing unit (CP1-CP4) to access a peripheral unit (PRP), the virtual processing unit being implemented by a physical processing unit (CPU) connected to the peripheral unit and executing several virtual processing units, the method comprising a step of transmitting to the peripheral unit an access request sent by the virtual processing unit to access a service provided by the peripheral unit, the access request comprising at least one parameter,
**characterized in that** the access request comprises an identifier (ID1-ID4) of the virtual processing unit (CP1-CP4), the method comprising steps executed by the peripheral unit (PRP), after receiving an access request, of:
allocating a set (RS1-RS4) of at least one register (RG1-RG3) to the virtual unit identifier (ID1-ID4) transmitted in the access request received,
storing the parameter transmitted in the access request in the register set allocated to the virtual unit identifier transmitted in the access request received, and
when the peripheral unit is available for processing a request, selecting one of the register sets, and triggering a service execution process in the peripheral unit from the parameters stored in the selected register set.

2. Method according to claim 1, wherein the selection of one of the register sets (RS1-RS4) is performed from the register sets meeting a condition for triggering a process in the peripheral unit.

3. Method according to claim 1 or 2, comprising a step of storing in the selected register set (RS1-RS4) parameters generated during the service execution process in the peripheral unit (PRP).

4. Method according to claim 3, comprising a step of transmitting parameters stored in the selected register set (RS1-RS4) to the virtual unit (CP1-CP4) to which the selected register set has been allocated.

5. Method according to one of claims 1 to 4, comprising steps of storing in each register set (RS1-RS4) allocated to a virtual unit (CP1-CP4) parameters defining a current state of a finite state machine (FSM), loading into the state machine the parameters defining a state machine current state stored in the selected register set, activating the state machine to determine parameters defining a next state of the state machine, and storing the parameters obtained in the selected register set so as to define a new current state of the state machine.

6. A peripheral unit providing a service to virtual processing units (CP1-CP4) implemented by a physical processing unit (CPU) connected to the peripheral unit and executing several virtual processing units, the peripheral unit being configured to receive access requests sent by the virtual processing units to access a service provided by the peripheral unit, each access request comprising at least one parameter,
**characterized in that** each access request comprises an identifier (ID1-ID4) of the virtual processing unit (CP1-CP4) having sent the request, the peripheral unit (PRP) comprising several register sets each comprising at least one register for storing a parameter transmitted in an access request received, the peripheral unit being configured for, after receiving an access request:
allocating one of the register sets (RS1-RS4) to the virtual unit identifier (ID1-ID4) transmitted in the access request received,
storing the parameter transmitted in the access request received in the register set allocated to the virtual unit identifier transmitted in the access request received, and
when the peripheral unit is available for processing a request, selecting one of the register sets, and triggering a service execution process in the peripheral unit from the parameters stored in the selected register set.

7. Peripheral unit according to claim 6, configured for selecting one of the register sets (RS1-RS4) from the register sets meeting a condition for triggering a process in the peripheral unit.

8. Peripheral unit according to claim 6 or 7, configured for storing in the selected register set (RS1-RS4) parameters generated during the service execution process in the peripheral unit (PRP).

9. Peripheral unit according to claim 8, configured for transmitting parameters stored in the selected register set (RS1-RS4) to the virtual unit (CP1-CP4) to which the selected register set has been allocated.

10. Peripheral unit according to one of claims 6 to 9, configured for storing in each register set (RS1-RS4) allocated to a virtual unit (CP1-CP4) parameters defining a current state of a finite state machine (FSM), loading into the state machine the parameters defining a state machine current state stored in the selected register set, activating the state machine to determine parameters defining a next state of the state machine, and storing the parameters obtained in the selected register set so as to define a new current state of the state machine.

11. A data processing system comprising a physical processing unit (CPU) executing several virtual processing units (CP1-CP4), and a peripheral unit (PRP) connected to the physical processing unit,
**characterized in that** the peripheral unit (PRP) is in conformity with one of claims 6 to 10.

12. System according to claim 11, comprising several physical processing units (CPU1, CPU2) each executing one or more virtual processing units (CP1-CP4), each physical processing unit being connected to the peripheral unit (PRP) by a common access point (EP).
